(19) Europäisches Patentamt
European Patent Office
Office européen des brevets

(11) **EP 4 287 358 B1**

(12) **EUROPEAN PATENT SPECIFICATION**

(45) Date of publication and mention
of the grant of the patent:
**04.02.2026 Bulletin 2026/06**

(21) Application number: **22882251.6**

(22) Date of filing: **26.04.2022**

(51) International Patent Classification (IPC):
*H01M 10/615* (2014.01)     *H01M 10/633* (2014.01)
*H01M 10/635* (2014.01)     *H01M 10/657* (2014.01)
*H01M 10/6571* (2014.01)     *H01M 10/658* (2014.01)

(52) Cooperative Patent Classification (CPC):
**H01M 10/633; H01M 10/615; H01M 10/657;**
**H01M 10/6571; H01M 10/658;** H01M 10/635;
Y02E 60/10

(86) International application number:
**PCT/CN2022/089330**

(87) International publication number:
**WO 2023/065626 (27.04.2023 Gazette 2023/17)**

(54) **BATTERY SYSTEM SUITABLE FOR ULTRALOW TEMPERATURE ENVIRONMENT OF POLAR REGIONS, AND TEMPERATURE CONTROL METHOD THEREFOR**

BATTERIESYSTEM FÜR ULTRANIEDRIGTEMPERATURUMGEBUNG VON POLAREN REGIONEN UND TEMPERATURSTEUERUNGSVERFAHREN DAFÜR

SYSTÈME DE BATTERIE APPROPRIÉ POUR UN ENVIRONNEMENT À TEMPÉRATURE ULTRA-FAIBLE DE RÉGIONS POLAIRES, ET PROCÉDÉ DE RÉGULATION DE TEMPÉRATURE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2021 CN 202111218583**

(43) Date of publication of application:
**06.12.2023 Bulletin 2023/49**

(73) Proprietors:
• **Chinese Academy of Meteorological Sciences**
**Beijing 100081 (CN)**
• **Nanjing Institute of Astronomical Optics & Technology, Niaot**
**Nanjing City, Jiangsu 210042 (CN)**

(72) Inventors:
• **DING, Minghu**
**Beijing 100081 (CN)**
• **DU, Fujia**
**Nanjing City, Jiangsu 210042 (CN)**

• **ZHANG, Wenqian**
**Beijing 100081 (CN)**
• **WEN, Haikun**
**Nanjing City, Jiangsu 210042 (CN)**
• **LU, Changgui**
**Beijing 100081 (CN)**

(74) Representative: **Ziebig Hengelhaupt Intellectual Property Attorneys Patentanwaltskanzlei PartGmbB**
**Leipziger Straße 49**
**10117 Berlin (DE)**

(56) References cited:
WO-A1-2017/124441     CN-A- 112 531 232
CN-A- 112 687 986     CN-A- 113 128 110
CN-A- 113 128 110     CN-A- 113 224 412
CN-A- 113 659 246     CN-U- 209 447 853
US-A1- 2014 012 445     US-A1- 2016 049 702
US-A1- 2018 029 483

**Description**

**FIELD OF THE INVENTION**

The present invention relates to a battery system, and particularly to a battery system suitable for an ultralow temperature environment of polar regions, and a temperature control method therefor.

**BACKGROUND OF THE INVENTION**

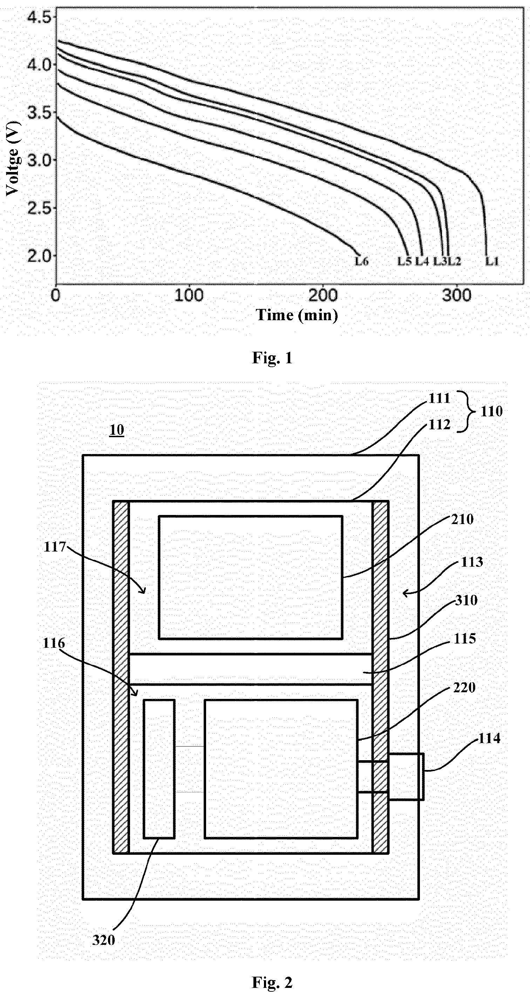

A battery has an effective working temperature range of -30°C to 60°C, Fig. 1 is a discharge curve of a battery in the prior art at different temperatures, and as shown in Fig. 1, L1-L6 are attenuation curves of battery voltage with time at the temperatures of 25°C, 0°C, -10°C, -20°C, - 30°C and -40°C respectively, and it can be seen that as the temperature decreases, the battery may have problems of an increased internal resistance, a high discharge speed, or the like, thus seriously influencing a service life of a battery pack.

Due to a unique geographic location and environment of a polar region, weather of the polar region is directly related to the global climate, the ecological environment, the future of mankind, and other significant problems. Therefore, a meteorological environment of the polar region is required to be continuously monitored by a weather station. As the only yet undeveloped continent in the world, Antarctica has self-evident significance.

However, construction of the weather station in Antarctica has many difficulties not present for other weather stations. Firstly, the low temperature environment of Antarctica: an overall environment temperature of Antarctica is quite low, an average air temperature thereof is lower than zero, and especially in the Dome A region which is a highest point of the Antarctic ice sheet, an air temperature range in the whole year is -25 °C to -90 °C, an average air temperature is - 55 °C, and therefore, safety and reliability of a device are challenged in such a low temperature environment. Secondly, an unattended operation mode: for China, currently, only the Zhongshan Station and the Great Wall Station in Antarctica are attended investigation stations, other investigation stations are in the unattended operation mode, and investigation team members can maintain the weather station at least until the next year after mounting the weather station. Thirdly, influences of a polar night environment: since Antarctica is mostly located within the Antarctic circle and is in the polar night environment for 1-6 months every year, a solar panel powered by the sun cannot work, and the weather station can only be powered by a battery pack.

Therefore, development of a battery system suitable for the ultralow temperature environment of the polar region and realization of reliable working of a battery in the ultralow temperature environment become problems to be urgently solved in polar research.

Patent application CN113128110A discloses an electric vehicle power battery thermal management optimization method adapted to cold regions.

**BRIEF DESCRIPTION OF THE INVENTION**

An object of the present invention is to provide a battery system suitable for an ultralow temperature environment of polar regions, and a temperature control method therefor.

A further object of the present invention is to solve a time-delay problem in temperature control and improve stability of temperature control.

Another object of the present invention is to reduce temperature fluctuations of a battery caused by changes in an environment temperature.

Particularly, the present invention provides a temperature control method for a battery system suitable for an ultralow temperature environment of polar regions, the battery system including: a housing having an inner container and an outer container, and a battery pack mounted in the inner container, a vacuum thermal-insulation layer being formed between the inner container and the outer container, a heating apparatus being arranged on a container wall of the inner container, and the heating apparatus controllably heating the inner container, the temperature control method including:

predicting a future temperature by using a thermal balance model of the battery pack;
inputting the future temperature into an assessment function of a temperature control system;
solving the assessment function by using a gradient descent method to obtain an optimal control quantity sequence; and
taking a first sequence value in the optimal control quantity sequence as an actual control quantity of the heating apparatus, and controlling, according to the actual control quantity, the heating apparatus to perform heating.

Optionally, the step of predicting a future temperature by using a thermal balance model of the battery pack includes:

acquiring heat-related parameters of the battery pack, the heat-related parameters including specific heat capacity $C_b$, mass $M_b$ and thermal resistance $R_b$;

continuously detecting temperature T and environment temperature $T_{amb}$ of the battery pack to obtain numerical values at a plurality of sampling moments; taking the heat-related parameters of the battery pack as parameters of the thermal balance model, and inputting values of temperature T and environment temperature $T_{amb}$ of the battery pack at a current moment into the thermal balance model; and

calculating the future temperature using the thermal balance model.

Optionally, an equation for the thermal balance model is:

$$C_b M_b (T_{k+1} - T_k) = P_k + h * P_k - \frac{1}{R_b}(T_k - T_{amb})$$

In the above equation, $T_k$ is the temperature of the battery pack at moment k, $T_{k+1}$ is the temperature of the battery pack at moment k+1, $P_k$ is heating power at moment k, and h is a sampling time interval from moment k to moment k+1.

Optionally, the assessment function is: $J(k) = \sum_{i=1}^{P} q_i(r - y(k + i))^2 + \sum_{j=1}^{M} z_j \Delta u^2(k + j - 1)$ ;

r is a temperature control target for the battery pack; $y(k + i)$ is the future temperature at moment k+i predicted by using the thermal balance model; $q_i$ is a preset temperature error suppression weight coefficient; $z_j$ is a preset weight coefficient for controlling energy consumption; $\Delta u(k + j - 1)$ is an output control quantity of the heating apparatus at moment k+j-1, P and M are preset values, and J(k) is the assessment function;

the solving the assessment function by using a gradient descent method includes: solving minimum value minJ(k) of J(k) by using the gradient descent method, so as to obtain the optimal control quantity sequence $u(k + i)$ corresponding to min J(k).

Optionally, after the step of taking a first sequence value in the optimal control quantity sequence as an actual control quantity of the heating apparatus, the method further includes:

predicting the environment temperature of the battery pack to determine an environment temperature change within set duration in the future; and

compensating the actual control quantity according to the environment temperature change; and

the step of controlling, according to the actual control quantity, the heating apparatus to perform heating includes: controlling the heating apparatus to perform heating by using the compensated actual control quantity.

Optionally, the step of predicting the environment temperature of the battery pack includes:

predicting the environment temperature by using a BP neural network, the BP neural network being trained by using historical temperature data of the working environment of the battery pack.

Optionally, the historical temperature data of the working environment of the battery pack is obtained by fusing weather monitoring data and remote sensing data of the working environment.

Optionally, the step of compensating the actual control quantity according to the environment temperature change includes:

calculating a heating amount caused by the environment temperature change;

calculating a control compensation value according to the heating amount; and

compensating the actual control quantity by using the control compensation value.

According to another aspect of the present invention, there is provided a battery system suitable for an ultralow temperature environment of polar regions, including:

a housing having an inner container and an outer container, a vacuum thermal-insulation layer being formed between the inner container and the outer container;

a battery pack mounted in the inner container;

a heating apparatus arranged on a container wall of the inner container and configured to controllably heat the inner container; and

a controller including a memory and a processor, the memory storing a machine executable program, and the machine executable program, when executed by the processor, implementing any one of the above-mentioned temperature control methods.

Optionally, the inner container and the outer container are made of stainless steel;
the inner container is divided into a first inner cavity and a second inner cavity by a vacuum partition plate, the first inner cavity is configured to arrange the battery pack and an instrument mainboard, and the power supply battery pack supplies power to the outside through a vacuum socket provided on the first inner cavity; the second inner cavity is configured to arrange a protection battery pack, the protection battery pack is configured to supply power to the heating apparatus; the heating apparatus is a heating film attached to an outer wall of the inner container.

For the battery system suitable for an ultralow temperature environment of polar regions and the temperature control method therefor according to the present invention, the future temperature is predicted using the thermal balance model, and the assessment function is solved by adopting the gradient descent method, so as to obtain the optimal control quantity sequence, such that the heating apparatus can be controlled to perform heating according to thermal inertia of the battery pack, temperature control precision is good, and consumed electric energy is low.

Further, for the battery system suitable for an ultralow temperature environment of polar regions and the temperature control method therefor according to the present invention, the environment temperature change of the battery pack may be predicted, and an influence of environment temperature fluctuations on temperature maintenance is compensated, thus further improving temperature stability.

Still further, by a structural improvement, the battery system suitable for an ultralow temperature environment of polar regions according to the present invention reduces heat diffusion and thereby saves energy consumption.

According to the following detailed description of specific embodiments of the present invention in conjunction with drawings, those skilled in the art will better understand the aforementioned and other objects, advantages and features of the present invention.

## BRIEF DESCRIPTION OF THE DRAWINGS

Some specific embodiments of the present invention will be described below in detail in an exemplary rather than restrictive manner with reference to the drawings. Identical reference numerals in the drawings represent identical or similar components or parts. Those skilled in the art should understand that these drawings are not necessarily drawn to scale. In the drawings:

Fig. 1 is a discharge curve of a battery in the prior art at different temperatures;
Fig. 2 is a schematic block diagram of a battery system suitable for an ultralow temperature environment of polar regions according to an embodiment of the present invention;
Fig. 3 is a graph of a temperature expectation curve versus a temperature prediction curve in a prior conventional temperature control solution;
Fig. 4 is a schematic diagram of a temperature control method for the battery system suitable for an ultralow temperature environment of polar regions according to an embodiment of the present invention;
Fig. 5 is a schematic diagram of a predicted result of an air temperature in future 30 minutes in the temperature control method for the battery system suitable for an ultralow temperature environment of polar regions according to an embodiment of the present invention;
Fig. 6 is a schematic diagram of control over the battery system suitable for an ultralow temperature environment of polar regions according to an embodiment of the present invention;
Fig. 7 is a schematic diagram of a temperature control method for the battery system suitable for an ultralow temperature environment of polar regions according to another embodiment of the present invention; and
Fig. 8 is a schematic diagram of a controller in the battery system suitable for an ultralow temperature environment of polar regions according to an embodiment of the present invention.

## DETAILED DESCRIPTION

Fig. 2 is a schematic block diagram of a battery system suitable for an ultralow temperature environment of polar regions according to an embodiment of the present invention. The battery system 10 may generally include: a housing 110, a battery pack 220, and a heating apparatus 310. The housing has an inner container 112 and an outer container 111, and a vacuum thermal-insulation layer 113 is formed between the inner container 112 and the outer container 111. The battery pack 220 is mounted in the inner container 112. The heating apparatus 310 is arranged on a container wall of the inner container 112 and configured to controllably heat the inner container 112.

The inner container 112 and the outer container 111 may be both made of stainless steel. The inner container 112 is divided into a first inner cavity 116 and a second inner cavity 117 by a vacuum partition plate 115, the first inner cavity 116 is configured to arrange the battery pack 220 and an instrument mainboard 320, and the battery pack 220 may supply power to the outside through a vacuum socket 114 provided on the first inner cavity 116; the second inner cavity 117 is configured to arrange a protection battery pack 210, and the protection battery pack 210 is configured to supply power to the heating apparatus 310. The heating apparatus 310 may be a heating film attached to an outer wall of the inner container 112.

The battery system according to the present embodiment is mainly configured to supply power to outdoor observation instruments, and particularly configured to supply power to weather observation devices of the ultralow temperature environment in the polar region (Antarctica). The vacuum thermal-insulation layer 113 between the inner container 112 and the outer container 111 can guarantee insulation of the inner container from outside air, thus reducing heat conduction. The first inner cavity 116 and the second inner cavity 117 may be arranged up and down, and the lower first inner cavity 116 is configured to mount the battery pack 220 and the instrument mainboard 320. The instrument mainboard 320 may be a mainboard of the weather observation device. The battery pack 220 supplies power to weather observation instruments, data acquisition and storage devices, or the like. The inner container 112 is connected to the outside through the vacuum socket 114, so as to guarantee a vacuum degree. The upper second inner cavity 117 is configured to arrange the protection battery pack 210, and the protection battery pack 210 is mainly configured to supply power to the heating apparatus 310, so as to realize temperature control. The above-mentioned configuration forms a passive temperature control system, thus minimizing heat exchange between the battery pack 220 and the outside.

The battery system 10 may be buried deep into the ground, for example, 1.5-2m into a snow layer. Low thermal conductivity of accumulated snow reduces energy exchange between the battery pack and the surrounding environment, thus effectively maintaining a temperature of the battery pack.

In the battery system 10, an active temperature control system is also formed by the heating apparatus 310, and a normal working temperature of the battery pack 220 is guaranteed using active heating. The heating apparatus 310 controllably heats the inner container 112 and has the following working principle.

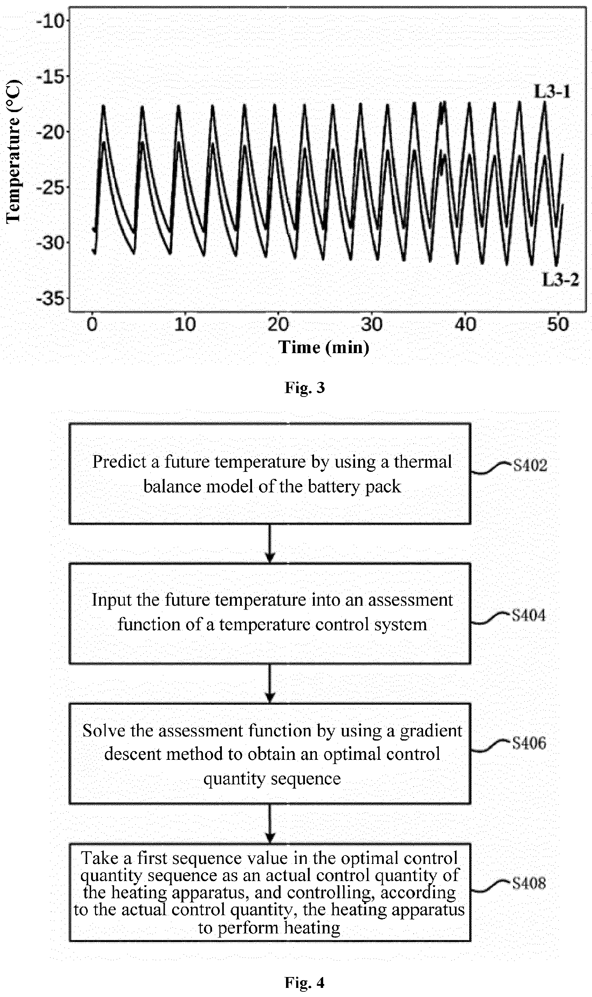

In a prior conventional temperature control solution, a threshold control mode is adopted, and a lower threshold and an upper threshold are preset. That is, heating is started when the temperature drops and is lower than the lower threshold. After heating, the temperature rises, heating is stopped when the temperature rises above the upper threshold, and heating power is constant. However, such a temperature maintaining mode may cause great fluctuations of the temperature of the battery pack. Fig. 3 is a graph of a temperature expectation curve versus a temperature prediction curve in the prior conventional temperature control solution. As shown in Fig. 3, there exist significant fluctuations in both the temperature expectation curve L3-1 and the temperature prediction curve L3-2. The temperature fluctuations of the battery pack not only affect a service life of a battery, but also increase consumption of temperature maintaining power. Another existing temperature control solution is proportional-integral-derivative (PID) control which adopts an adjustable-power-source temperature maintaining mode. However, this solution requires a relatively long debugging process, and thermal inertia of the battery pack may also cause temperature fluctuations.

In addition to influences of the temperature maintaining mode on the temperature control of the battery pack, the external environment may affect temperature maintenance of the battery pack. Even if the battery pack is buried deep into the ground, energy transfer still exists in the snow layer, and heat transfer in the snow layer mainly has three modes: 1. conduction through ice particles (crystal lattice); 2. conduction through air between pores; 3. conduction of latent heat of condensation and sublimation of vapor through a pore space. The environment temperature is one of factors affecting changes in a heat conductivity coefficient of the snow. Thermal conduction of the snow layer may cause a temperature change of the housing of the battery pack, thereby affecting temperature stability of the battery pack.

In order to suppress the influences of the thermal inertia of the battery pack and the environment temperature on the temperature control of the battery pack, the present embodiment further provides a temperature control method for the battery system suitable for an ultralow temperature environment of polar regions. The heating apparatus is controlled to perform heating according to the thermal inertia of the battery pack, such that temperature control precision is good, and consumed electric energy is low. Fig. 4 is a schematic diagram of a temperature control method for the battery system suitable for an ultralow temperature environment of polar regions according to an embodiment of the present invention, and the temperature control method includes:

step S402: predicting a future temperature by using a thermal balance model of the battery pack;
step S404: inputting the future temperature into an assessment function of a temperature control system;
step S406: solving the assessment function by using a gradient descent method to obtain an optimal control quantity sequence; and
step S408: taking a first sequence value in the optimal control quantity sequence as an actual control quantity of the heating apparatus, and controlling, according to the actual control quantity, the heating apparatus to perform heating.

Step S402 may include: acquiring heat-related parameters of the battery pack, the heat-related parameters including specific heat capacity $C_b$, mass $M_b$ and thermal resistance $R_b$; continuously detecting temperature T and environment temperature $T_{amb}$ of the battery pack to obtain numerical values at a plurality of sampling moments; taking the heat-related parameters of the battery pack as parameters of the thermal balance model, and inputting values of temperature T and environment temperature $T_{amb}$ of the battery pack at a current moment into the thermal balance model; and calculating the future temperature using the thermal balance model.

A temperature rise process of the battery pack under the action of heating power is shown by formula (1):

$$c \cdot M_b = \frac{dQ}{dT} \qquad (1)$$

In formula (1), c is the specific heat capacity which refers to heat required to raise a temperature of 1kg of a homogeneous substance by 1K without phase changes and chemical changes, and is expressed in J/(kg·K); $M_b$ is a weight of the battery pack in kg; Q is heat absorbed by devices in the heating process in J; T is the temperature of the battery pack in °C. When heating of the heating apparatus is started, the heating power is shown by formula (2):

$$P = \frac{U^2}{R} \qquad (2)$$

In formula (2), P is the heating power in W; U is a heating voltage in V; R is a heating resistance in Ω.

According to thermal balance characteristics of the battery pack, the following formula may be obtained by combining formula (1) and formula (2):

$$C_b M_b \frac{dT}{dt} = Pt - \frac{1}{R_b}(T - T_{amb}) \qquad (3)$$

In formula (3), $C_b$ is the specific heat capacity of the battery pack; $M_b$ is the mass of the battery pack in kg; $R_b$ is a thermal resistance of the battery pack in K/W; $T_{amb}$ is the environment temperature in °C.

The equation of the thermal balance model may be obtained by discretizing formula (3), as shown in formula (4):

$$C_b M_b (T_{k+1} - T_k) = P_k + h * P_k - \frac{1}{R_b}(T_k - T_{amb}) \qquad (4)$$

In formula (4), $T_k$ is the temperature of the battery pack at moment k, $T_{k+1}$ is the temperature of the battery pack at moment k+1, $P_k$ is the heating power at moment k, and h is a sampling time interval from moment k to moment k+1.

In the temperature control process of the battery pack, in order to prevent a severe temperature change and meanwhile minimize heating energy consumption, rolling optimization is required to be performed on the temperature control process. Optimal output, i.e., the assessment function, of a battery pack control system at sampling moment $t=kT_s$ is defined, as shown in formula (5):

$$J(k) = \sum_{i=1}^{P} q_i (r - y(k + i))^2 + \sum_{j=1}^{M} z_j \Delta u^2(k + j - 1) \qquad (5)$$

In formula (5), r is a temperature control target for the battery pack; y(k + i) is the future temperature at moment k+i predicted by using the thermal balance model; $q_i$ is a preset temperature error suppression weight coefficient; $z_j$ is a preset weight coefficient for controlling energy consumption; Δu(k + j - 1) is an output control quantity of the heating apparatus at moment k+j-1, P and M are preset values, and J(k) is the assessment function.

The step of solving the assessment function by using a gradient descent method includes: solving minimum value minJ(k) of J(k) by using the gradient descent method, so as to obtain the optimal control quantity sequence u(k + i) corresponding to minJ(k).

The gradient descent method is used for solving the minimum value of the assessment function, and the optimal control quantity sequence u(k + i) minimizing the assessment function is obtained finally. First change control quantity u(k) is used as the actual control quantity of an input voltage of the heating film. Therefore, the temperature can be controlled precisely, and the electric energy consumption is minimized.

Further, considering that air temperature fluctuations on site may affect the temperature of the battery pack, the influence of the air temperature fluctuations on the temperature of the battery pack may be regarded as an interference factor from the viewpoint of a design of the control system. With the temperature control method according to the present embodiment, the influence of the air temperature fluctuations on the temperature control is compensated through feedforward control. Therefore, air temperature changes in a future period of time are required to be predicted, such that measures can be taken in advance to suppress the influence of the air temperature fluctuations.

Methods for predicting the air temperature mainly include regression prediction, multivariate statistical analysis, or the like. Traditional prediction methods have a problem of insufficient precision due to characteristics of instability and randomness of the air temperature. In order to improve the precision of air temperature prediction, in the present embodiment, a machine learning method is further proposed to be used for predicting the air temperature, so as to meet characteristics of a high dynamic change and instability of the air temperature.

As an optional mode, after the step of taking a first sequence value in the optimal control quantity sequence as an actual control quantity of the heating apparatus, the method further includes: predicting the environment temperature of the battery pack to determine an environment temperature change within set duration in the future, and compensating the actual control quantity according to the environment temperature change; and the step of controlling, according to the actual control quantity, the heating apparatus to perform heating includes: controlling the heating apparatus to perform heating by using the compensated actual control quantity.

Prediction of the environment temperature of the battery pack is performed by using a BP neural network in machine learning, which may specifically include: predicting the environment temperature by using the BP neural network, the BP neural network being trained by using historical temperature data of the working environment of the battery pack. The historical temperature data of the working environment of the battery pack is obtained by fusing weather monitoring data and remote sensing data of the working environment. The remote sensing data can make up deficiencies of the weather monitoring data, so as to guarantee integrity of a BP neural network training model. Air temperature parameters are predicted by using the BP neural network in machine learning, which has a main target of predicting the air temperature change in a future period of time (30 minutes), so as to provide reference for the control system.

Prediction of the air temperature by the BP neural network includes a first step of training the BP neural network by using air temperature data of previous certain duration (for example, a whole year) of a field, and the historical air temperature data can be obtained by fusing monitoring data and remote sensing data which are obtained by a weather station mounted on Antarctica in the past. A network architecture of the finally selected BP neural network includes 30 input layer neurons, 14 hidden layer neurons and 6 output layer neurons, and furthermore, an activation function of the BP neural network is a Sigmoid function, a target function is a mean square error, and an optimization algorithm is a gradient descent method. It should be understood by those skilled in the art that the specific parameters mentioned above are exemplary and can be adjusted as required in actual use.

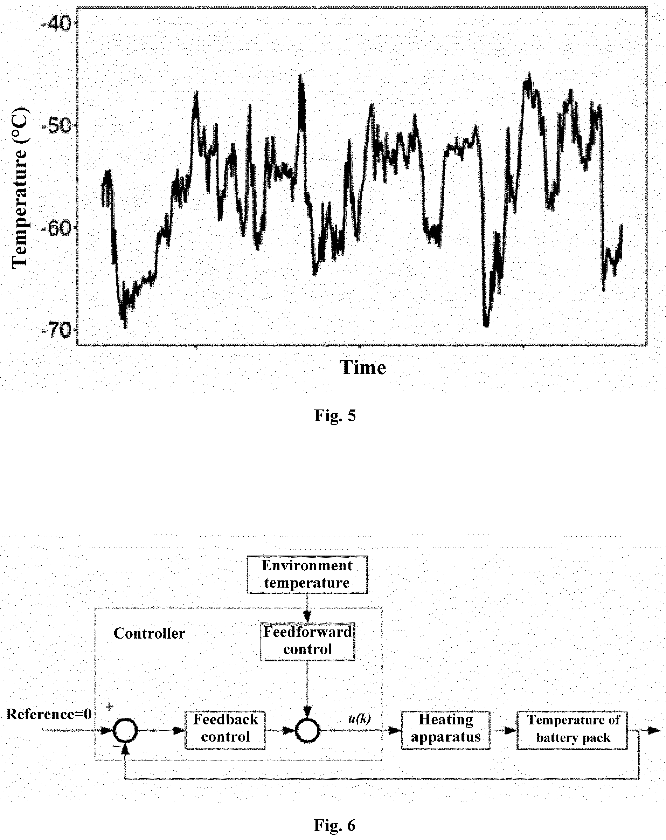

Fig. 5 is a schematic diagram of a predicted result of the air temperature in future 30 minutes in the temperature control method for the battery system suitable for an ultralow temperature environment of polar regions according to an embodiment of the present invention. By performing a statistic operation on Fig. 5, a weather prediction error is 0.315°C, accuracy thereof is in line with an expectation, and a requirement of prediction of the air temperature fluctuation is met.

The step of compensating the actual control quantity according to the environment temperature change may include: calculating a heating amount caused by the environment temperature change; calculating a control compensation value according to the heating amount; and compensating the actual control quantity by using the control compensation value. A calculation formula of the heating amount caused by the environment temperature change is shown in formula (6):

$$\Delta Q = -\lambda \times \frac{dT}{dx}\Delta S\Delta t \qquad (6)$$

In formula (6), $\Delta S$ is a cross-sectional area of an isotropic solid material in an x-axis direction, $\frac{dT}{dx}$ is a temperature change rate of the material in the x-axis direction, $\Delta Q$ is heat transferred through a cross section with $\Delta S$ in a positive x-axis direction during time $\Delta t$, and $\lambda$ is thermal conductivity (or thermal conductivity coefficient) in W/(mK). By defining the x-axis direction of the battery pack, the heat caused by a temperature change rate can be determined, and the control compensation value is further determined and calculated using $\Delta Q$, so as to compensate the actual control quantity.

In the battery system suitable for an ultralow temperature environment of polar regions, a vacuum means is adopted, the battery system is buried deep into the ground, and heat dissipation of the battery pack is greatly reduced and heat consumption is reduced by using the passive temperature control system. In the temperature control method, on the one hand, a time-delay problem of temperature control caused by large temperature inertia of the battery pack is solved by utilizing model prediction control, thus improving stability of temperature control; on the other hand, the model is trained using the whole year air temperature data actually measured on site; the prediction model for the air temperature in a future certain period of time is obtained by utilizing BP neural network training, the environment temperature obtained by the weather station is combined, and the influence of the air temperature fluctuations is compensated by utilizing feedforward control, thereby improving the temperature stability of the battery.

Fig. 6 is a schematic diagram of control over the battery system suitable for an ultralow temperature environment of polar regions according to an embodiment of the present invention. The temperature of the battery pack is used as a feedback quantity of the controller, the future temperature is predicted by the thermal balance model, and the assessment function is solved by adopting the gradient descent method, so as to obtain the optimal control quantity sequence output by feedback control. The fluctuation of the environment temperature predicted by the BP neural network is used as feedforward control input of the controller to compensate the actual control quantity. Finally, power supply voltage u(k) provided for the heating apparatus is obtained, and the battery pack is heated by the heating apparatus, thus reducing the battery temperature fluctuation and minimizing the heating electric-energy consumption.

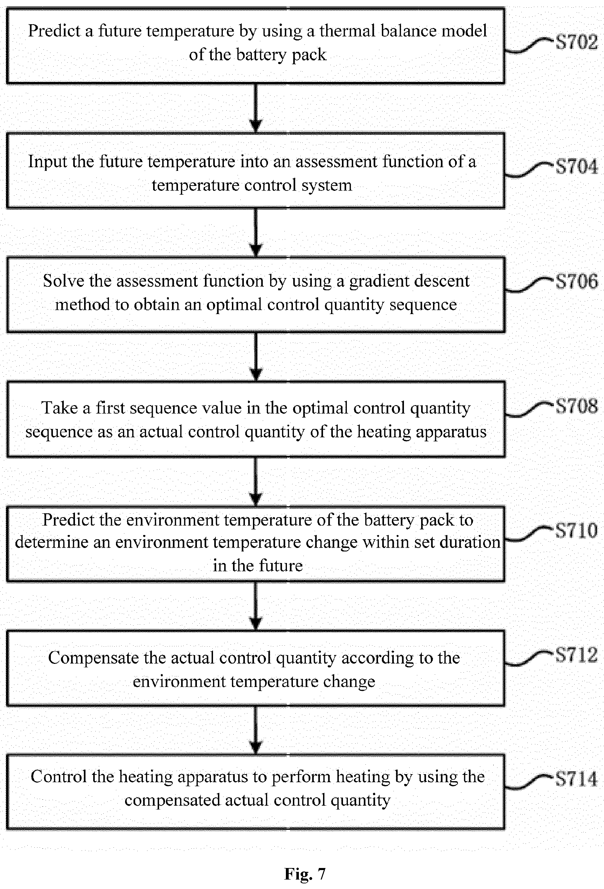

Fig. 7 is a schematic diagram of a temperature control method for the battery system suitable for an ultralow temperature environment of polar regions according to another embodiment of the present invention, and the temperature control method according to the present embodiment is an execution flow of the control process shown in Fig. 6, and specifically includes:

step S702: predicting a future temperature by using a thermal balance estimation model of the battery pack;
step S704: inputting the future temperature into an optimization assessment function of a temperature control system;
step S706: solving the optimization assessment function by using a gradient descent method, so as to obtain an optimal control quantity sequence; and
step S708: taking a first sequence value in the optimal control quantity sequence as an actual control quantity of the heating apparatus.

The above steps S702 to S708 are consistent with the process of determining the actual control quantity in the above steps S402 to S408, and after the step S708, the method further includes:

step S710: predicting the environment temperature of the battery pack to determine an environment temperature change within set duration in the future;
step S712: compensating the actual control quantity according to the environment temperature change; and
step S714: controlling the heating apparatus to perform heating by using the compensated actual control quantity.

The steps S710 to S712 are performed by using the above-described way of predicting the environment temperature by the BP neural network in machine learning.

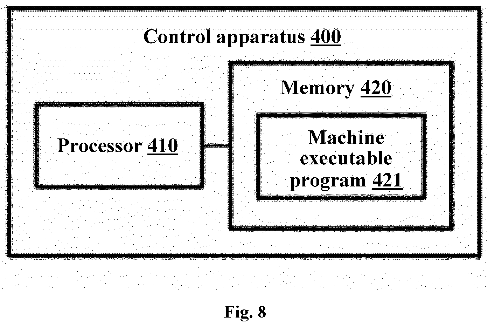

Fig. 8 is a schematic diagram of the controller in the battery system suitable for an ultralow temperature environment of polar regions according to an embodiment of the present invention. The controller 400 includes a memory 420 and a processor 410, the memory 420 storing a machine executable program 421, and the machine executable program 421, when executed by the processor 410, implementing any one of the above-mentioned temperature control methods.

It should be noted that the logic and/or steps described in the flow charts or in other manners, which, e.g., may be regarded as a sequential list of executable instructions for implementing logic functions, may be implemented in any computer-readable medium for usage of instruction execution systems, apparatuses or devices, such as computer-based systems, systems including processors, or other systems which can read instructions from an instruction execution system, apparatus or device and execute them, or in combination therewith to use.

In the description of the present embodiment, "computer-readable medium" may be any apparatus that contains, stores, communicates, propagates or transmits programs for an instruction execution system, apparatus or device or in combination therewith for the usage.

It should be understood that each element described in the present invention may be implemented with hardware, software, firmware or a combination thereof. In the above implementation, a plurality of steps or methods may be implemented in software or firmware which is stored in the memory 420 and executed by a suitable instruction execution system. For example, the hardware implementation is the same as that in another embodiment, which can be implemented with any one of the following technologies well-known in the art or a combination thereof: a discrete logic circuit having a logic gate circuit which implements a logic function for a data signal, a dedicated integrated circuit having a suitable combined logic gate circuit, a programmable gate array (PGA), a field programmable gate array (FPGA) and so on.

**Claims**

1.  A temperature control method for a battery system (10) suitable for an ultralow temperature environment of polar regions, the battery system (10) comprising:
    a housing having an inner container (112) and an outer container (111), and a battery pack (220) mounted in the inner container (112), a vacuum thermal-insulation layer (113) being formed between the inner container (112) and the outer container (111), a heating apparatus (310) being arranged on a container wall of the inner container (112), and the heating apparatus (310) controllably heating the inner container (112), the temperature control method comprising:

predicting (S402) a future temperature by using a thermal balance model of the battery pack (220);
inputting (S404) the future temperature into an assessment function of a temperature control system;
solving (S406) the assessment function by using a gradient descent method to obtain an optimal control quantity sequence; and
taking (S408) a first sequence value in the optimal control quantity sequence as an actual control quantity of the heating apparatus (310), and controlling, according to the actual control quantity, the heating apparatus (310) to perform heating.

2. The temperature control method for a battery system (10) suitable for an ultralow temperature environment of polar regions according to claim 1, wherein the step of predicting (S402) a future temperature by using a thermal balance model of the battery pack (220) comprises:

acquiring heat-related parameters of the battery pack (220), the heat-related parameters comprising specific heat capacity $C_b$, mass $M_b$ and thermal resistance $R_b$;
continuously detecting temperature T and environment temperature $T_{amb}$ of the battery pack (220) to obtain numerical values at a plurality of sampling moments; taking the heat-related parameters of the battery pack (220) as parameters of the thermal balance model, and inputting values of temperature T and environment temperature $T_{amb}$ of the battery pack (220) at a current moment into the thermal balance model; and
calculating the future temperature using the thermal balance model.

3. The temperature control method for a battery system (10) suitable for an ultralow temperature environment of polar regions according to claim 1 or 2, wherein the assessment function is:

$$J(k) = \sum_{i=1}^{P} q_i (r - y(k + i))^2 + \sum_{j=1}^{M} z_j \Delta u^2(k + j - 1);$$

r is a temperature control target for the battery pack (220); $y(k + i)$ is the future temperature at moment k+i predicted by using the thermal balance model; $q_i$ is a preset temperature error suppression weight coefficient; $z_j$ is a preset weight coefficient for controlling energy consumption; $\Delta u(k + j - 1)$ is an output control quantity of the heating apparatus (310) at moment k+j-1, P and M are preset values, and J(k) is the assessment function;
the step of solving (S406) the assessment function by using a gradient descent method comprises: solving minimum value minJ(k) of J(k) by using the gradient descent method, so as to obtain the optimal control quantity sequence $u(k + i)$ corresponding to minJ(k).

4. The temperature control method for a battery system (10) suitable for an ultralow temperature environment of polar regions according to any one of claims 1 to 3, wherein after the step of taking a first sequence value in the optimal control quantity sequence as an actual control quantity of the heating apparatus (310), the method further comprises:

predicting (S710) the environment temperature of the battery pack (220) to determine an environment temperature change within set duration in the future; and
compensating (S712) the actual control quantity according to the environment temperature change; and
the step of controlling (S408), according to the actual control quantity, the heating apparatus (310) to perform heating comprises: controlling (S714) the heating apparatus (310) to perform heating by using the compensated actual control quantity.

5. The temperature control method for a battery system (10) suitable for an ultralow temperature environment of polar regions according to claim 4, wherein the step of predicting the environment temperature of the battery pack (220) comprises:
predicting the environment temperature by using a BP neural network, the BP neural network being trained by using historical temperature data of the working environment of the battery pack (220).

6. The temperature control method for a battery system (10) suitable for an ultralow temperature environment of polar regions according to claim 5,
wherein the historical temperature data of the working environment of the battery pack (220) is obtained by fusing weather monitoring data and remote sensing data of the working environment.

7. The temperature control method for a battery system (10) suitable for an ultralow temperature environment of polar regions according to any one of claims 4 to 6, wherein the step of compensating the actual control quantity according to the environment temperature change comprises:

calculating a heating amount caused by the environment temperature change;
calculating a control compensation value according to the heating amount; and
compensating the actual control quantity by using the control compensation value.

8. A battery system (10) suitable for an ultralow temperature environment of polar regions, comprising:

a housing having an inner container (112) and an outer container (111), a vacuum thermal-insulation layer (113) being formed between the inner container (112) and the outer container (111);
a battery pack (220) mounted in the inner container (112);
a heating apparatus (310) arranged on a container wall of the inner container and configured to controllably heat the inner container (112); and
a controller (400) comprising a memory (420) and a processor (410), the memory (420) storing a machine executable program, and the machine executable program, when executed by the processor (410), implementing the temperature control method according to any one of claims 1 to 7.

9. The battery system (10) suitable for an ultralow temperature environment of polar regions according to claim 8,

wherein the inner container (112) and the outer container (111) are made of stainless steel;
the inner container (112) is divided into a first inner cavity (116) and a second inner cavity (117) by a vacuum partition plate (115), the first inner cavity (116) is configured to arrange the battery pack (220) and an instrument mainboard (320), and the battery pack (220) supplies power to the outside through a vacuum socket provided on the first inner cavity (116); the second inner cavity (117) is configured to arrange a protection battery pack (210), the protection battery pack (210) is configured to supply power to the heating apparatus (310); and
the heating apparatus (310) is a heating film attached to an outer wall of the inner container (112).

**Patentansprüche**

1. Temperatursteuerungsverfahren für Batteriesystem (10) für Ultraniedrigtemperaturumgebung von polaren Gebieten, wobei das Batteriesystem (10) aufweist:
ein Gehäuse mit einem inneren Behälter (112) und einem äußeren Behälter (111) und ein Batteriepaket (220), das in dem inneren Behälter (112) montiert ist, wobei eine Vakuum-Wärmeisolierschicht (113) zwischen dem inneren Behälter (112) und dem äußeren Behälter (111) ausgebildet ist, eine Heizvorrichtung (310) an einer Behälterwand des inneren Behälters (112) angeordnet ist und die Heizvorrichtung (310) den inneren Behälter (112) steuerbar erwärmt, wobei das Temperatursteuerungsverfahren umfasst:

Vorhersagen (S402) einer zukünftigen Temperatur unter Verwendung eines thermischen Bilanzmodells des Batteriepakets (220);
Eingeben (S404) der zukünftigen Temperatur in eine Bewertungsfunktion eines Temperatursteuerungssystems;
Lösen (S406) der Bewertungsfunktion unter Verwendung eines Gradientenabstiegsverfahrens, um eine optimale Abfolge von Steuergrößen zu erhalten; und
Verwenden (S408) eines ersten Abfolgewerts in der optimalen Abfolge von Steuergrößen als Ist-Steuergröße der Heizvorrichtung (310) und Steuern der Heizvorrichtung (310) dazu, zu heizen, anhand der Ist-Steuergröße.

2. Temperatursteuerungsverfahren für Batteriesystem (10) für Ultraniedrigtemperaturumgebung von polaren Gebieten nach Anspruch 1, wobei der Schritt des Vorhersagens (S402) einer zukünftigen Temperatur unter Verwendung eines thermischen Bilanzmodells des Batteriepakets (220) umfasst:

Beziehen von wärmebezogenen Parametern des Batteriepakets (220), wobei die wärmebezogenen Parameter eine spezifische Wärmekapazität $C_b$, eine Masse $M_b$ und einen thermischen Widerstand $R_b$ umfassen;
kontinuierliches Erfassen einer Temperatur T und einer Umgebungstemperatur $T_{amb}$ des Batteriepakets (220), um numerische Werte zu mehreren Messzeitpunkten zu erlangen; Verwenden der wärmebezogenen Parameter des Batteriepakets (220) als Parameter des thermischen Bilanzmodells und Eingeben von Werten der Temperatur T und der Umgebungstemperatur $T_{amb}$ des Batteriepakets (220) zu einem aktuellen Zeitpunkt in das thermische Bilanzmodell; und
Berechnen der zukünftigen Temperatur unter Verwendung des thermischen Bilanzmodells.

3. Temperatursteuerungsverfahren für Batteriesystem (10) für Ultraniedrigtemperaturumgebung von polaren Gebieten nach Anspruch 1 oder 2, wobei die Bewertungsfunktion lautet:

$$J(k) = \sum_{i=1}^{p} q_i \big(r - y(k+i)\big)^2 + \sum_{j=1}^{M} z_j \Delta u^2(k+j-1);$$

wobei r ein Temperatursteuerungsziel für das Batteriepaket (220) ist; *y(k+i)* die zukünftige Temperatur zum Zeitpunkt *k+i* ist, die unter Verwendung des thermischen Bilanzmodells vorhergesagt wird; $q_i$ ein voreingestellter Temperaturfehlerunterdrückung-Gewichtskoeffizient ist; $z_j$ ein voreingestellter Gewichtskoeffizient zur Steuerung eines Energieverbrauchs ist; *Δu(k+j -1)* eine ausgegebene Steuergröße der Heizvorrichtung (310) zum Zeitpunkt *k+j-1* ist, P und *M* voreingestellte Werte sind und *J(k)* die Bewertungsfunktion ist;
wobei der Schritt des Lösens (S406) der Bewertungsfunktion unter Verwendung eines Gradientenabstiegsverfahrens umfasst: Lösen nach dem minimalen Wert *min J(k)* von *J(k)* unter Verwendung des Gradientenabstiegsverfahrens, um die optimale Abfolge von Steuergrößen *u(k+ i)* entsprechend *min J(k)* zu erhalten.

4. Temperatursteuerungsverfahren für Batteriesystem (10) für Ultraniedrigtemperaturumgebung von polaren Gebieten nach einem der Ansprüche 1 bis 3, wobei das Verfahren nach dem Schritt des Verwendens eines ersten Abfolgewerts in der optimalen Abfolge von Steuergrößen als Ist-Steuergröße der Heizvorrichtung (310) ferner umfasst:

Vorhersagen (S710) der Umgebungstemperatur des Batteriepakets (220), um eine Umgebungstemperaturänderung innerhalb eines festgelegten Zeitraums in der Zukunft zu bestimmen; und
Kompensieren (S712) der Ist-Steuergröße anhand der Umgebungstemperaturänderung; und
der Schritt des Steuerns (S408) der Heizvorrichtung (310) dazu, zu heizen, anhand der Ist-Steuergröße umfasst:
Steuern (S714) der Heizvorrichtung (310) dazu, zu heizen, unter Verwendung der kompensierten Ist-Steuergröße.

5. Temperatursteuerungsverfahren für Batteriesystem (10) für Ultraniedrigtemperaturumgebung von polaren Gebieten nach Anspruch 4, wobei der Schritt des Vorhersagens der Umgebungstemperatur des Batteriepakets (220) umfasst: Vorhersagen der Umgebungstemperatur unter Verwendung eines neuronalen Netzwerks mit BP, wobei das neuronale Netzwerk mit BP unter Verwendung von historischen Temperaturdaten der Arbeitsumgebung des Batteriepakets (220) trainiert wurde.

6. Temperatursteuerungsverfahren für Batteriesystem (10) für Ultraniedrigtemperaturumgebung von polaren Gebieten nach Anspruch 5,
wobei die historischen Temperaturdaten der Arbeitsumgebung des Batteriepakets (220) durch Verschmelzen von Wetterüberwachungsdaten und Fernerkundungsdaten der Arbeitsumgebung erlangt werden.

7. Temperatursteuerungsverfahren für Batteriesystem (10) für Ultraniedrigtemperaturumgebung von polaren Gebieten nach einem der Ansprüche 4 bis 6, wobei der Schritt des Kompensierens der Ist-Steuergröße anhand der Umgebungstemperaturänderung umfasst:

Berechnen einer Heizmenge, die durch die Umgebungstemperaturänderung verursacht wird;
Berechnen eines Steuerungskompensationswerts anhand der Heizmenge; und
Kompensieren der Ist-Steuergröße unter Verwendung des Steuerungskompensationswerts.

8. Batteriesystem (10) für Ultraniedrigtemperaturumgebung von polaren Gebieten, aufweisend:

ein Gehäuse mit einem inneren Behälter (112) und einem äußeren Behälter (111), wobei eine Vakuum-Wärmeisolierschicht (113) zwischen dem inneren Behälter (112) und dem äußeren Behälter (111) ausgebildet ist;
ein Batteriepaket (220), das in dem inneren Behälter (112) montiert ist;
eine Heizvorrichtung (310), die an einer Behälterwand des inneren Behälters angeordnet ist und dazu eingerichtet ist, den inneren Behälter (112) steuerbar zu erwärmen; und
ein Steuergerät (400), das einen Speicher (420) und einen Prozessor (410) aufweist, wobei in dem Speicher (420) ein maschinenausführbares Programm gespeichert ist und das maschinenausführbare Programm bei Ausführung durch den Prozessor (410) das Temperatursteuerungsverfahren nach einem der Ansprüche 1 bis 7 umsetzt.

9. Batteriesystem (10) für Ultraniedrigtemperaturumgebung von polaren Gebieten nach Anspruch 8,

wobei der innere Behälter (112) und der äußere Behälter (111) aus Edelstahl hergestellt sind;
wobei der innere Behälter (112) durch eine Vakuumtrennplatte (115) in einen ersten inneren Hohlraum (116) und einen zweiten inneren Hohlraum (117) unterteilt ist, der erste innere Hohlraum (116) dazu eingerichtet ist, das Batteriepaket (220) und eine Gerätehauptplatine (320) anzuordnen, und das Batteriepaket (220) durch eine an dem ersten inneren Hohlraum (116) bereitgestellte Vakuumsteckdose Leistung nach außen zuführt; wobei der zweite innere Hohlraum (117) dazu eingerichtet ist, ein Schutz-Batteriepaket (210) anzuordnen, das Schutz-Batteriepaket (210) dazu eingerichtet ist, der Heizvorrichtung (310) Leistung zuzuführen; und
wobei die Heizvorrichtung (310) eine Heizfolie ist, die an einer Außenwand des inneren Behälters (112) angebracht ist.

**Revendications**

1. Procédé de contrôle de la température pour un système de batterie (10) adapté à un environnement à très basse température des régions polaires, le système de batterie (10) comprend:
un boîtier comportant un conteneur intérieur (112) et un conteneur extérieur (111), et un bloc-batterie (220) monté dans le conteneur intérieur (112), une couche d'isolation thermique sous vide (113) étant formée entre le conteneur intérieur (112) et le conteneur extérieur (111), un dispositif de chauffage (310) étant disposé sur une paroi de conteneur du conteneur intérieur (112), et le dispositif de chauffage (310) chauffant de manière contrôlable le conteneur intérieur (112), le procédé de contrôle de la température comprend:

la prédiction (S402) d'une température future en utilisant un modèle d'équilibre thermique du bloc-batterie (220);
l'entrée (S404) de la température future dans une fonction d'évaluation d'un système de contrôle de la température;
la résolution (S406) de la fonction d'évaluation en utilisant un procédé de descente de gradient pour obtenir une séquence optimale de quantité de contrôle; et
la prise (S408) d'une première valeur de séquence dans la séquence optimale de quantité de contrôle comme quantité de contrôle réelle du dispositif de chauffage (310), et le contrôle, en fonction de la quantité de contrôle réelle, du dispositif de chauffage (310) pour effectuer le chauffage.

2. Procédé de contrôle de la température pour un système de batterie (10) adapté à un environnement à très basse température des régions polaires selon la revendication 1, dans lequel l'étape de prédiction (S402) d'une température future en utilisant un modèle d'équilibre thermique du bloc-batterie (220) comprend:

l'acquisition des paramètres liés à la chaleur du bloc-batterie (220), les paramètres liés à la chaleur comprenant la capacité thermique spécifique $C_b$, la masse $M_b$ et la résistance thermique $R_b$;
la détection en continu de la température T et de la température ambiante $T_{amb}$ du bloc-batterie (220) pour obtenir des valeurs numériques à plusieurs moments d'échantillonnage; la prise des paramètres liés à la chaleur du bloc-batterie (220) comme paramètres du modèle d'équilibre thermique, et l'entée des valeurs de température T et de température ambiante $T_{amb}$ du bloc-batterie (220) à un moment donné dans le modèle d'équilibre thermique; et
le calcul de la température future en utilisant le modèle d'équilibre thermique.

3. Procédé de contrôle de la température pour un système de batterie (10) adapté à un environnement à très basse température des régions polaires selon la revendication 1 ou 2, dans lequel la fonction d'évaluation est:

$$J(k) = \sum_{i=1}^{P} q_i(r - y(k + i))^2 + \sum_{j=1}^{M} z_j \Delta u^2(k + j - 1);$$

r est une cible de contrôle de température pour le bloc-batterie (220); y(k + i) est la température future au moment k+i prédite en utilisant le modèle d'équilibre thermique; $q_i$ est un coefficient de pondération prédéfini pour la suppression des erreurs de température; zj est un coefficient de pondération prédéfini pour contrôler la consommation d'énergie; $\Delta u(k + j - 1)$ est une quantité de contrôle de sortie du dispositif de chauffage (310) au moment k+j-1, P et M sont des valeurs prédéfinies, et J(k) est la fonction d'évaluation;
l'étape de résolution (S406) de la fonction d'évaluation en utilisant un procédé de descente de gradient comprend: la résolution de la valeur minimale min J (k) de J(k) en utilisant le procédé de descente de gradient, afin d'obtenir la séquence optimale de quantité de contrôle u(k + i) correspondant à min J (k).

4. Procédé de contrôle de la température pour un système de batterie (10) adapté à un environnement à très basse température des régions polaires selon l'une quelconque des revendications 1 à 3, dans lequel, après l'étape consistant à prendre une première valeur de séquence dans la séquence optimale de quantité de contrôle comme quantité de contrôle réelle du dispositif de chauffage (310), le procédé comprend en outre:

la prédiction (S710) de la température ambiante du bloc-batterie (220) afin de déterminer un changement de température ambiante dans un délai défini à l'avenir; et
la compensation (S712) de la quantité de contrôle réelle en fonction du changement de température ambiante; et
l'étape de contrôle (S408), en fonction de la quantité de contrôle réelle, du dispositif de chauffage (310) pour effectuer le chauffage comprend: le contrôle (S714) du dispositif de chauffage (310) pour effectuer le chauffage en utilisant la quantité de contrôle réelle compensée.

5. Procédé de contrôle de la température pour un système de batterie (10) adapté à un environnement à très basse température des régions polaires selon la revendication 4, dans lequel l'étape de prédiction de la température ambiante du bloc-batterie (220) comprend:
la prédiction de la température ambiante en utilisant un réseau neuronal BP, le réseau neuronal BP étant entraîné à partir de données de température historiques de l'environnement de fonctionnement du bloc-batterie (220).

6. Procédé de contrôle de la température pour un système de batterie (10) adapté à un environnement à très basse température des régions polaires selon la revendication 5,
dans lequel les données historiques de température de l'environnement de fonctionnement du bloc-batterie (220) sont obtenues en fusionnant les données de surveillance météorologique et les données de télédétection de l'environnement de fonctionnement.

7. Procédé de contrôle de la température pour un système de batterie (10) adapté à un environnement à très basse température des régions polaires selon l'une quelconque des revendications 4 à 6, dans lequel l'étape de compensation de la quantité de contrôle réelle en fonction du changement de température ambiante comprend:

le calcul d'une quantité de chauffage causée par le changement de température ambiante;
le calcul d'une valeur de compensation de contrôle en fonction de la quantité de chauffage; et
la compensation de la quantité de contrôle réelle en utilisant la valeur de compensation de contrôle.

8. Système de batterie (10) adapté à un environnement à très basse température des régions polaires, comprenant:

un boîtier comportant un conteneur intérieur (112) et un contenant extérieur (111), une couche d'isolation thermique sous vide (113) étant formée entre le conteneur intérieur (112) et le conteneur extérieur (111);
un bloc-batterie (220) monté dans le conteneur intérieur (112);
un dispositif de chauffage (310) disposé sur une paroi de conteneur du conteneur intérieur et configuré pour chauffer de manière contrôlable le conteneur intérieur (112); et
un contrôleur (400) comprenant une mémoire (420) et un processeur (410), la mémoire (420) stockant un programme exécutable par machine, et le programme exécutable par machine, lorsqu'exécuté par le processeur (410), mettant en œuvre le procédé de contrôle de la température selon l'une quelconque des revendications 1 à 7.

9. Système de batterie (10) adapté à un environnement à très basse température des régions polaires selon la revendication 8,

dans lequel le conteneur intérieur (112) et le contenant extérieur (111) sont en acier inoxydable;
le conteneur intérieur (112) est divisé en une première cavité intérieure (116) et une deuxième cavité intérieure (117) par une plaque de séparation sous vide (115), la première cavité intérieure (116) est configurée pour accueillir le bloc-batterie (220) et une carte mère d'instrument (320), et le bloc-batterie (220) alimente l'extérieur en énergie via une prise sous vide prévue dans la première cavité intérieure (116); la deuxième cavité intérieure (117) est configurée pour accueillir un bloc-batterie de protection (210), le bloc-batterie de protection (210) est configuré pour alimenter le dispositif de chauffage (310) en énergie; et
le dispositif de chauffage (310) est un film chauffant fixé à une paroi extérieure du conteneur intérieur (112).

**Fig. 1**

**Fig. 2**

**Fig. 3**

**Fig. 4**

Fig. 5

Fig. 6

Predict a future temperature by using a thermal balance model of the battery pack ⟶ S702

↓

Input the future temperature into an assessment function of a temperature control system ⟶ S704

↓

Solve the assessment function by using a gradient descent method to obtain an optimal control quantity sequence ⟶ S706

↓

Take a first sequence value in the optimal control quantity sequence as an actual control quantity of the heating apparatus ⟶ S708

↓

Predict the environment temperature of the battery pack to determine an environment temperature change within set duration in the future ⟶ S710

↓

Compensate the actual control quantity according to the environment temperature change ⟶ S712

↓

Control the heating apparatus to perform heating by using the compensated actual control quantity ⟶ S714

Fig. 7

Control apparatus **400**

Memory **420**

Processor **410**

Machine executable program **421**

Fig. 8

**REFERENCES CITED IN THE DESCRIPTION**

**Patent documents cited in the description**

- CN 113128110 A